# EUROPEAN PATENT SPECIFICATION

(11) **EP 2 133 636 B1**
(45) Date of publication and mention of the grant of the patent: **25.01.2012**
(21) Application number: 09162208.4
(22) Date of filing: 08.06.2009
(51) Int. Cl.: F25B 15/00, F25B 15/06, F25B 37/00, F25B 39/02

(54) **Absorber and absorber-evaporator assembly for absorption machines and lithium bromide - water absorption machines that integrate said absorber and absorber-evaporator assembly**
Absorber und Absorber-Verdampferanordnung für Absorptionsmaschinen und Lithiumbrom-Wasserabsorptionsmaschinen mit dem Absorber und der Absorber-Verdampferanordnung
Absorbeur et ensemble absorbeur-évaporateur pour machines d'absorption et machines d'absorption d'eau bromure de lithium intégrant lesdits absorbeur et ensemble absorbeur-évaporateur

(30) Priority: 09.06.2008 ES 200801738; 05.12.2008 ES 200803461; 12.03.2009 ES 200900691
(43) Date of publication of application: 16.12.2009
(73) Proprietor: Consejo Superior De Investigaciones Científicas, 28006 Madrid (ES)
(72) Inventor: Izquierdo Millan, Marcelo, 28033 Madrid (ES); Martin Lazaro, Emilio, 28033 Madrid (ES); Palacios Lorenzo, María Esther, 28040 Madrid (ES)
(74) Representative: Pons Ariño, Angel

(56) References cited:
- EP-A2- 1 120 613
- WO-A1-2005/108880
- JP-A- 2002 201 290
- US-A- 4 439 999
- US-A- 5 016 448
- US-A- 5 205 137
- US-A- 5 255 534
- US-A- 5 551 254
- US-A- 5 586 447

## Description

### OBJECT OF THE INVENTION

The present invention relates to absorption machines used in air-conditioning and/or refrigeration installations that function using a solution of lithium bromide-water.

A first object of the invention is an absorber for an absorption machine.

A second object of the invention is an absorber-evaporator assembly.

A third object of the invention is a single effect lithium bromide absorption machine integrating the abovementioned absorber or absorber-evaporator assembly.

A fourth object of the invention is a double-effect lithium bromide absorption machine integrating the abovementioned absorber or absorber-evaporator assembly.

A fifth object of the invention is a lithium bromide absorption machine which alternates between single and double-effect functioning, integrating the abovementioned absorber or absorber-evaporator assembly.

### BACKGROUND OF THE INVENTION

In most applications, refrigeration and air-conditioning technology uses cooling machines that work with refrigerants (CFCs, HCFCs and HFCs) which are ozone-destructive (CFCs and HCFCs) and generate a much greater greenhouse effect than that of CO₂. Since in most cases, these machines use electricity, their functioning also generates carbon dioxide.

As an alternative to these machines, the first industrial applications that were developed were based on the thermodynamic principles of the absorption of a vapour by a liquid, in order to achieve the cooling of another liquid. The absorption cycles are based on the physical capacity of certain substances, such as water and certain salts, such as Lithium Bromide, to absorb, in liquid phase, the vapours of other substances such as Ammonia and water, respectively.

In an absorption machine a process occurs whereby the refrigerant, water, ammonia or others, is evaporated in the evaporator using the heat from the change of state of a fluid that circulates inside the tube bundle of the exchanger. The vapours produced are absorbed by the absorbent, water or lithium bromide solution or others, in a dissolving process in which their temperature increases, requiring external cooling so that the solution is kept at the right temperature conditions and the pressure does not increase in the chamber where the absorption occurs and which is referred to as the Absorber.

In this external cooling circuit, water cooling towers are normally used. The water cooled in the tower is made to circulate inside the tube bundle of another exchanger which is situated inside the absorber chamber and on which the absorbent is sprinkled to facilitate the absorption process. The mass of absorbent containing the refrigerant is transported, by means of pumps, to another heat exchanger whose function is to separate the refrigerant from the absorbent, by distillation of the former. This heat exchanger is referred to as the generator. Through its tube bundle the hot fluid is made to circulate, normally water or water vapour, which constitutes the main source of energy for the absorption cycle to function, and which can also arrive as the effluent from any other type of process that generates residual heat.
Document US 5 205 137 refers to an absorption air conditioner having a regenerating chamber for heating and condensing a portion of a dilute solution generated in an absorber and an absorption chamber for causing refrigerant vapour generated in the regenerating chamber to be absorbed into said dilute solution which is at an intermediate position in the passage connected from the absorber to the regenerator so that the size of the absorber is reduced the overall size of the absorption air conditioner is reduced

### DESCRIPTION OF THE INVENTION

The absorption machine to which this invention relates is developed for use in air-conditioning or refrigeration installations, more specifically for those systems that use the absorption of lithium bromide and water.

The single effect lithium bromide-water absorption machine comprises as fundamental elements:
an absorber capable of maintaining a low pressure and low evaporation temperature when the outside temperature is high, with direct cooling by outside air or by water, which carries out separate heat and mass transfer processes,
a condenser cooled directly by outside air or by water from a tower or from another refrigeration circuit,
an evaporator,
a heat generator, and
a heat recuperator.

The heat generator comprises at least a heating chamber where there is a heat exchanger, preferably made of refractory stainless steel, when the source of heat is direct flame, in such a way that it facilitates the transfer of heat to the lithium bromide-water solution; exchanger that can use the heat produced by a field of solar captors, by a biomass boiler, by a bio-diesel boiler, by a bio-ethanol boiler, by a conventional fossil fuel boiler, or the residual heat of engine exhaust fumes, fuel batteries, fuel cells, or any thermal process that generates a sufficient temperature of residual heat.

The generator may likewise incorporate as an alternative or complement to the exchanger a low, medium or high-powered modulating burner controlled by a PDI regulator which allows the temperature to be controlled at will, which generates heat in the heating chamber as a consequence of the combustion of a fossil fuel, preferably GLP, GN, diesel oil, Biodiesel, Biogas or others.

Additionally, in the heating chamber the generator is fitted with a water vapour separator.

The lithium bromide solution is introduced diluted into the generator's heating chamber, absorbs the heat, boiling to a temperature comprised between 85°C and 125°C or more, depending on the T of the outside air, producing reheated refrigerant vapour (hot and concentrated solution) and water vapour, which is separated in the separator. The water vapour leaves the generator and is sent to the condenser, where it is transformed into liquid, to be then sent through an expansion valve to the evaporator where it is once again converted into water vapour.

The heat recuperator is preferably a plate exchanger with copper welds, and transfers the heat from the hot and concentrated solution that comes out of the generator to the diluted and cold solution that comes from the absorber, preheating it, before it is supplied to the generator.

The hot and concentrated solution from the generator travels through the recuperator and its pressure is reduced in a reduction valve situated between the recuperator and the absorber, so that it enters the absorber at a lower pressure.

The absorber comprises the following elements:
a storage tank,
a row of sprinklers situated inside the storage tank through which the hot and concentrated solution passes for sprinkling inside the tank where upon contact with the water vapour from the evaporator it becomes diluted,
a heat exchanger, outside the storage tank and preferably finned, which cools the diluted solution,
a recirculation pump which sucks in the diluted solution from the storage tank and propels it towards the heat exchanger from which the cooled diluted solution is expelled returning to the row of sprinklers in a continuous recirculation process encouraging the increased transfer of mass and heat, and
a generator feed pump that sucks in the diluted solution from the absorber and propels it towards the generator, through the recuperator, where the solution becomes concentrated again.

The absorber transmits the absorption heat from the solution in the absorber directly to the atmospheric air, through the heat exchanger. This is one of the fundamental and differential characteristics of the absorber of the present invention in respect of other systems wherein first the absorption heat is transferred from the solution to a water circuit and then from the water to the outside air propelled by the fan. Instead, with the system described in the present invention the difference in temperature between the solution and the outside air is increased in respect of the difference in temperatures that recooling requires, and for this reason the heat transfer is better, the area of exchange is lower, an exchanger is saved, and the absorption temperature is made to approach the temperature of the outside air as much as possible.

Another very important feature is the design of the absorber, which functions by sprinkling the solution. Sprinkling facilitates the transfer of mass and since the absorption process is adiabatic, the heat transfer occurs in the exchanger, independent and external, which by working with a high efficiency also reduces the exchange area.

Absorption is obtained by sprinkling the solution in the form of flat parallel sheets, with an essentially fan-type triangular shape, which facilitates to a great extent and in a very efficient manner the transfer of mass.

The sprinklers have oval-shaped nozzles which allow the sprinkling of the solution in a flat sheet with the abovementioned fan shape, said flat sheet having a large surface, which remains in contact with the water vapour from the evaporator and present in the absorber chamber encouraging the absorption.

This offers consequently a lower volume absorber than those currently distributed and a highly efficient solution-air heat exchanger with a lower area than those currently existing on the market. These qualities mean that the total volume of the absorber-exchanger is less than those existing on the market and therefore, the volume of the machine is also lower. Therefore, the advantages of an absorber such as the one described are: high heat and mass transfer coefficients, low volume/power ratio, easy to build, easy to access, easy to inspect and easy to maintain. This absorber can be used for both single and multi-effect machines.

The evaporator incorporates an exchanger through the inside of which circulates water coming from the space intended for cooling, for example, commercial premises, the inside of a car, a cold store, and also has a cold air pump that propels the water cooled in this exchanger towards the cooling device installed in the space to be air-conditioned.

The condenser is specifically designed for low pressure water vapour coming from the generator and it is integrated in the machine by means of a special design in two phases in order to save space. Given its small size and its arrangement inside the machine, it helps to reduce the overall size of same. The condenser preferably comprises, in the cases where air is used to cool it, a heat exchanger and a fan, wherein the heat exchanger is preferably made of copper tubes with aluminium fins. It may also be cooled using water from a tower or from another refrigeration circuit. The water vapour produced in the generator at a temperature of between 80°C and 125°C is condensed directly by the outside air when working with refrigeration, or by the air of the space to be cooled, for example the inside of a building, when working in heating mode.

It is noteworthy that this absorption machine can use exhaust fumes or renewable heat or renewable fuel or fuel from a conventional fuel boiler to transfer its heat in the generator.

This absorption machine is applicable for producing cold in a static or mobile fridge, capable of working on inclined planes and with sharp accelerations: in city or intercity diesel buses with spontaneous ignition, in city or intercity petrol buses with provoked ignition, in both petrol and diesel lorries and trucks, for the transport of refrigerated products, on both petrol and diesel-fuelled thermal engine craft, and in thermal engine vehicles other than those indicated in the preceding claims, which have hot exhaust fumes; as well as to air-condition greenhouses, refrigerated stores at temperatures above 7°C, and to air-condition premises where thermal engines are used.

At the same time, the lithium bromide-water absorption machine can be used as a system for producing additional heat to that of the exhaust fumes during extended periods in neutral gear, by combustion of additional fuel external to the engine or internally in the combustion chamber itself, and as a system for producing additional heat to that of exhaust fumes during extended journeys by road or rail, by combustion of additional fuel, external to the engine or internal in the combustion chamber itself.

Another object of the invention is a multiple effect absorption machine, such as a double-effect machine, which in addition to the elements comprising the single effect machine also includes another generator, another recuperator and a sub-cooler.

The double-effect machine comprises as generator, a high pressure generator and another low pressure generator connected to the high pressure one, with the high pressure generator associated to the heating chamber that may be fitted with a burner. Each of the high and low pressure generators is in turn connected respectively to a high and low pressure recuperator which sends the hot and concentrated solution from the generators to the absorber via the corresponding pressure reduction valves.

The low pressure generator connected after the high pressure generator separates the refrigerant vapour and the liquid water, the vapour is directed to a condenser, while the liquid water is sent to a sub-cooler adjacent to the condenser. Next, the water vapour condensed in the condenser and in the sub-cooler is directed to high and low pressure expansion valves, respectively, where the pressure and temperature is reduced until entry into the evaporator.

Unlike with the single effect machine, the absorber has an additional input connected to the high pressure recuperator via one of the previously mentioned pressure reduction valves, and the feed pump to the generator directs the diluted solution to the high and low pressure recuperators via a solution distribution valve.

At the same time, the possibility has been contemplated of the heat exchanger of the absorber being a solution-water exchanger instead of a solution-air exchanger, wherein the water is cooled by the water from a tower.

Another object of the invention is for both the single effect and multiple effect machines to have the absorber and evaporator integrated in an absorber-evaporator assembly.

This absorber-evaporator assembly has a container or storage tank with a separating isolating wall perpendicular to the base of the container which generates two spaces or chambers that allow mixing of the gases or water vapour in the upper part, since said wall does not reach the lid or top surface of the container. The evaporator is inside an evaporation chamber and comprises a tube bundle that forms a circuit through which the refrigerating liquid circulates normally coming from the room to be cooled, leaving the tubes that are located in the upper part of the evaporation chamber at a higher temperature than the tubes located in the lower part of the chamber or viceversa.

In this evaporator, the water that reaches this evaporation chamber coming from the condenser is made to evaporate. The water, once evaporated, passes in the form of water vapour to the adjacent chamber or absorption chamber.

The water vapour coming from the evaporation chamber is introduced into this absorption chamber adjacent to the evaporation chamber and reaches a collector on which the sprinklers are mounted from which the hot concentrated solution is discharged.

The described configuration is valid for both single effect absorption machines and for multiple effect absorption machines, such as double or even triple effect. Depending on the type of collector, there would be one, two or three lines of hot concentrated solution coming from two generators, as well as one, two or three inputs of water coming from a condenser.

Another object of the invention is a combined-use absorption machine, which combines the single effect functioning mode with the double effect mode, wherein the functioning may alternate between one and the other depending on the needs of the installation it serves, and wherein there is a system of pipes and valves that makes it possible to determine the functioning mode. This absorption machine may likewise include the described absorber or absorber-evaporator assembly.

This combined use absorption machine would be fundamentally for application in the case of using renewable energies, wherein the single effect machine would use a renewable energy, such as solar energy or recovered residual heat, and the double effect machine would use a commercial fuel as a source of heat.

Thus, the absorption machine comprising the object of this invention is for use, both when condensed by water and when condensed by air, to air-condition buildings, private dwellings, business premises, to cool business premises, cold stores, to cool greenhouses, industrial buildings, etc., and may also be used to air-condition and refrigerate any type of vehicle: boats, city and intercity buses, trucks, truck cabins.

### DESCRIPTION OF THE DRAWINGS

To complement the description being made and for the purpose of facilitating a better understanding of the features of the invention according to a preferred practical embodiment thereof, a set of drawings is attached as an integral part of said description, in which the following has been represented with an illustrative and non-limiting character:
Figure 1.- Shows an outline of the single effect absorption machine that incorporates the absorber of the invention represented in schematic form.
Figure 2.- Shows an elevated section view of the nozzle connected to the sprinkler.
Figure 3.- Shows a plan view of the nozzle.
Figure 4.- Shows a schematic view of the sprinkler with its nozzle projecting a flat sheet, with a triangular fan-type shape.
Figure 5.- Shows the heat generator with exchanger.
Figure 6.- Shows the heat generator with burner.
Figure 7.- Shows an outline of the double effect absorption machine that incorporates the absorber of the invention shown in schematic form.
Figure 8.- Shows an outline of the absorption machine that integrates the single effect functioning mode with the double effect functioning mode.
Figure 9.- Shows an outline of the single effect absorption machine that incorporates the absorber-evaporator assembly of the invention represented in schematic form.
Figure 10.- Shows an outline of the double effect absorption machine that incorporates the absorber-evaporator assembly of the invention represented in schematic form.
Figure 11.- Shows an elevated section view of the absorber-evaporator assembly in its application for a single effect machine.
Figure 12.- Shows a side section view of the absorber-evaporator assembly in its application for a single effect machine.
Figure 13.- Shows an elevated section view of the absorber-evaporator assembly in its application for a double effect machine.
Figure 14.- Shows a side section view of the absorber-evaporator assembly in its application for a double effect machine.

### PREFERRED EMBODIMENT OF THE INVENTION

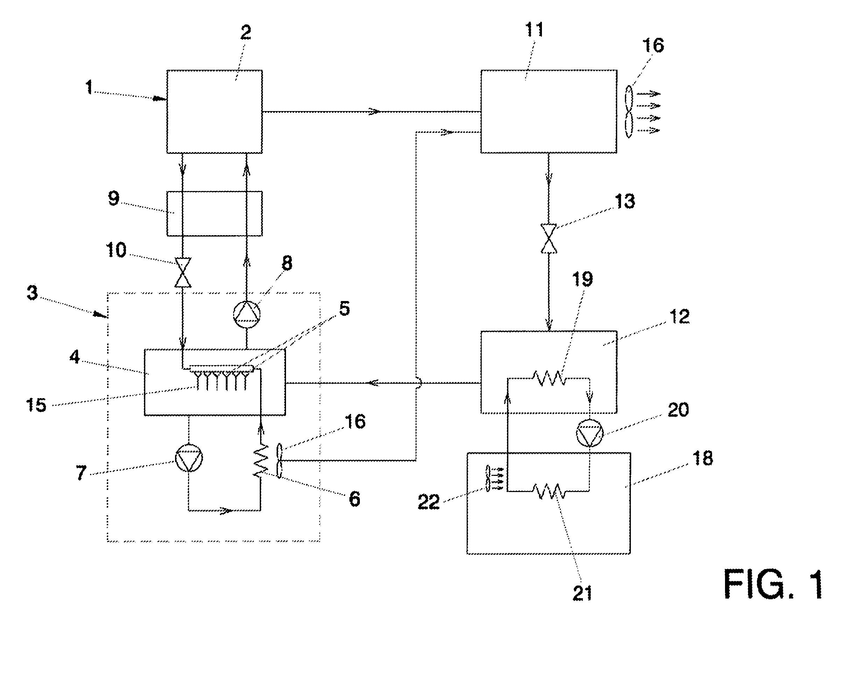

According to the outline shown in figure 1, the single effect lithium bromide absorption machine of the invention comprises:
- a heat generator (1) which has a heating chamber (2) adapted to heat the lithium bromide-water solution that includes a water vapour separator (not shown),
- an absorber (3) that comprises:
   a storage tank (4),
   a row of sprinklers (5), situated inside the storage tank (4) through which the hot and concentrated solution is passed that is then projected inside the tank (4) for its dilution,
   a heat exchanger (6), outside the storage tank (4) which cools the diluted solution,
   a recirculation pump (7) which sucks in the diluted solution from the storage tank (4) and propels it towards the heat exchanger (6) from which the cooled diluted solution emerges returning to the row of sprinklers (5) in a continuous recirculation process, and
   a feed pump (8) adapted to supply the heat generator (1) sucking in the diluted solution from the absorber (3) and sending it to the generator (1) where the solution is concentrated again,
- a heat recuperator (9) situated between the generator (1) and the absorber (3) in which the heat is transferred from the hot and concentrated solution that comes out of the generator (1) to the diluted and cold solution that comes from the absorber (3), preheating it, before it is supplied to the generator (1),
- a pressure reduction valve (10) situated between the heat recuperator (9) and the absorber (3),
- a condenser (11) connected to the generator (1) which condenses the water vapour produced in the generator (1),
- an evaporator (12) connected to the absorber (3) adapted to introduce water vapour into the absorber (3), and
- an expansion valve (13) which connects the condenser (11) to the evaporator (12).

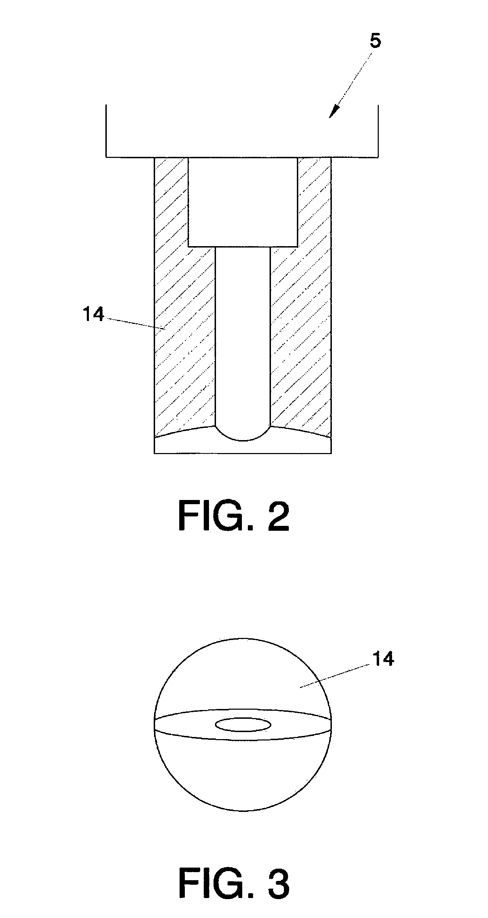

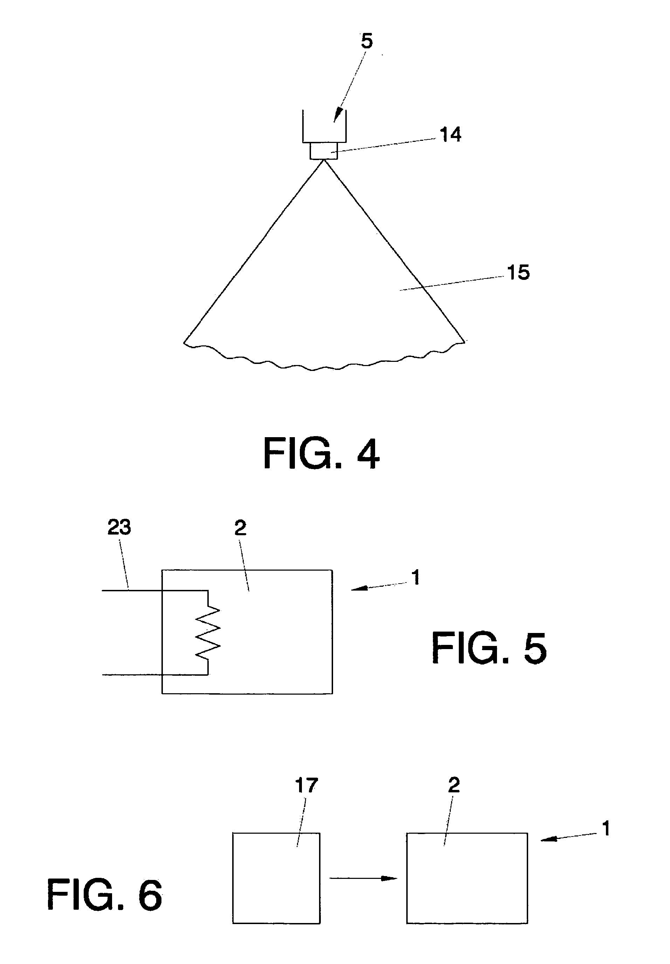

According to the described configuration, the absorption machine stands out mainly for the incorporation, in each one of the sprinklers of the row of sprinklers (5), of oval-shaped nozzles (14), shown in figures 2 and 3, adapted to spray the solution in the form of a flat sheet (15) with an essentially triangular fan-type shape, as can be appreciated from figure 4, where the nozzles (14) of the sprinklers are arranged preferably in such a way that said flat sheets (15) are projected in parallel, as may be observed in figure 1.

Likewise it is important to note that according to one of the fundamental characteristics of the invention, the heat exchanger (6) of the absorption machine is a solution-air exchanger, as shown in figure 1 with a fan (16) associated to said exchanger, although it is also contemplated that maintaining the particular features described in the paragraph above the heat exchanger (6) may be of the solution-water type.

The fan (16) of the solution-air heat exchanger (6) may be the same as the fan (16) that cools the condenser (11), as may be observed in figure 1.
Figures 5 and 6 show that the generator (1) may integrate in the heating chamber (2) a heat exchanger (23) and/or associated to the heating chamber may have a fossil fuel burner (17).
Figure 1 shows the application of the absorption machine to a space to be air-conditioned (18), wherein it can be appreciated that the evaporator (12) integrates an exchanger (19) through the inside of which circulates water coming from the space to be air-conditioned (18) for cooling, also having a cold water pump (20) that sends the water cooled in this exchanger (19) to a cooling device (21) installed in the space to be air-conditioned (18), which is fitted with a fan (22).

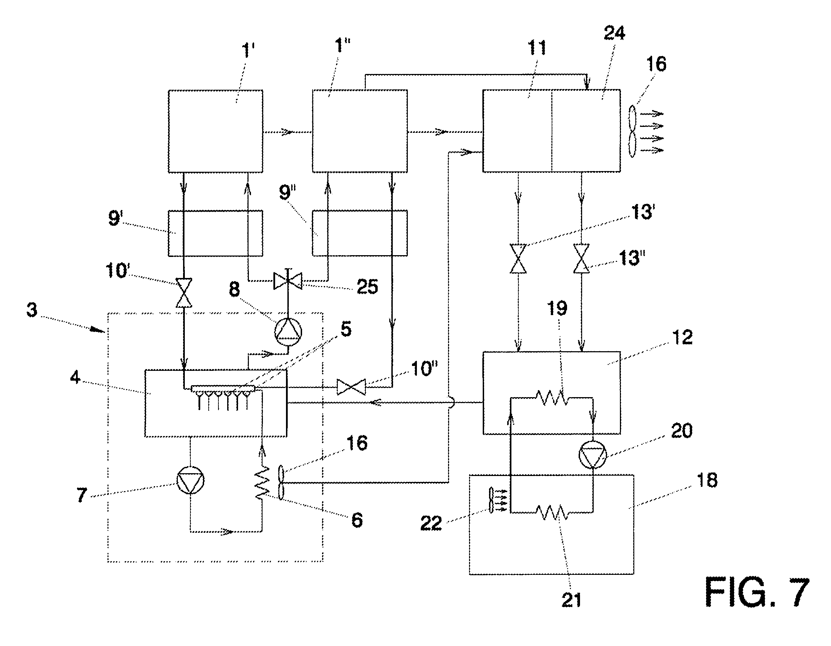

Figure 7 shows a double effect lithium bromide machine that comprises part of the elements appearing in figure 1 of the single effect machine, wherein instead of a single generator it has a high pressure generator (1') and a low pressure generator (1") connected to the high pressure generator (1'), wherein the high pressure generator (1') may be associated to the burner (17). At the same time, each one of the generators of high (1') and low pressure (1") is in turn connected respectively to a high pressure recuperator (9') and a low pressure recuperator (9") which sends the hot and concentrated solution from the high and low pressure generators (1', 1") to the absorber (3), integrating pressure reduction valves (10', 10") between them and the absorber (3).

The low pressure generator (1") is connected to the condenser (11) and to a sub-cooler (24) adjacent to the condenser (11). From the condenser (11) and the sub-cooler (24) comes condensed water vapour which is sent to high (13') and low (13") pressure expansion valves, respectively, where the pressure and temperature is reduced until their entry into the evaporator (12).

In this case, the integration of an additional input to the absorber (3) is contemplated, which would be connected to the low pressure recuperator (9") via the pressure reduction valve (10") mentioned above, and it is also contemplated that the feed pump (8) directs the solution diluted in the absorber (3) towards the high (9') and low pressure recuperators (9") via a solution distribution valve (25).

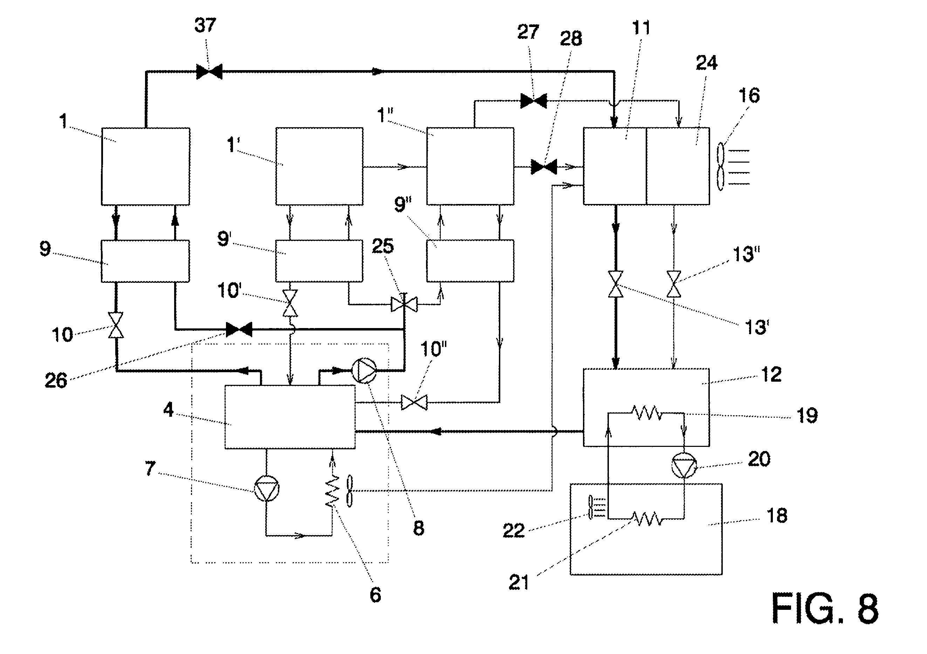

Figure 8 shows an absorption machine that alternates functioning between a single effect and a double effect machine, incorporating a series of valves that allow one mode or another to be enabled. Specifically, the machine includes:
- a connection valve (37) between generator (1) and condenser (11),
- a return valve to the recuperator (26), situated between recuperator (9) and a branch running from the solution distribution valve (25) to the feed pump (8),
- a circulation valve to the sub-cooler (27), which connects the low pressure generator (1 ") to the sub-cooler (24), and
- a circulation valve to the condenser (28) which connects the low pressure generator (1 ") to the condenser (11).

Two functioning mode may be distinguished for the machine, the single effect functioning mode and the double effect functioning mode. In the case of the single effect the circulation of the fluid intervening in the functioning of the machine has been represented in a thick line, wherein only the pressure reduction valve (10), the return valve to the recuperator (26), the connection valve (37), and the high pressure expansion valve (13') are opened, while the rest of the valves remain closed.

In the case of the machine functioning in double effect mode only the return valve to the recuperator (26), the expansion valve (10) and the connection valve (37) are closed.

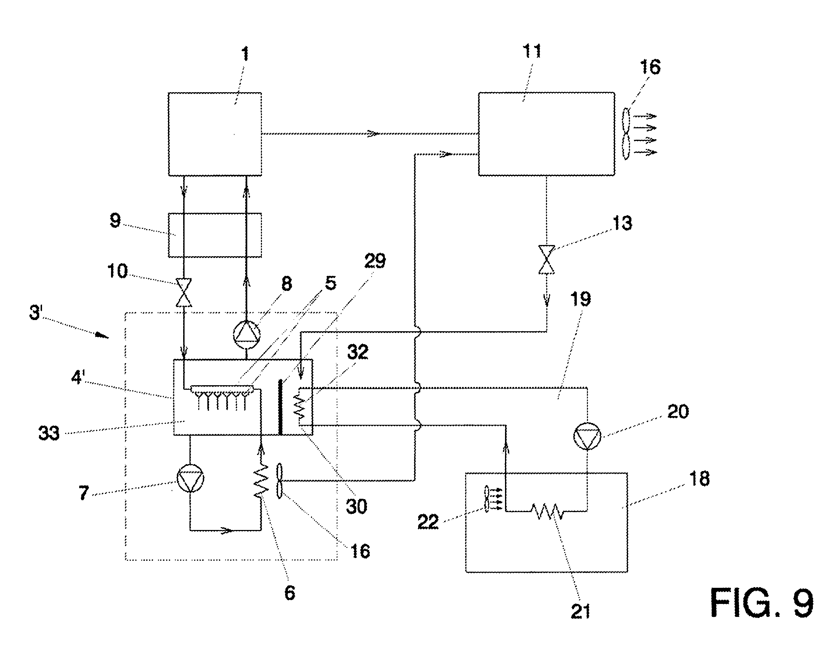

On a separate note, figure 9 shows a single effect absorption machine where instead of the absorber (3) the integration of an absorber-evaporator assembly (3') is proposed, represented in schematic form, which comprises a storage tank (4') equipped with a vertical isolating separating wall (29) which forms two chambers (30, 33) communicating with each other by their upper part:
an evaporation chamber (30) defined on one side of the vertical separating wall (29) which comprises an evaporator (32), and
an absorption chamber (33) defined on the other side of the vertical separating wall (29) where the concentrated solution is diluted.

This absorber-evaporator assembly (3') shares with the absorber (3) the inclusion of the feed pump (8) adapted to extract the diluted solution, the heat exchanger (6) outside which cools the diluted solution, and the recirculation pump (7) which sucks in the diluted solution and propels it towards the heat exchanger (6) for its return to the row of sprinklers (5) in a continuous recirculation process.

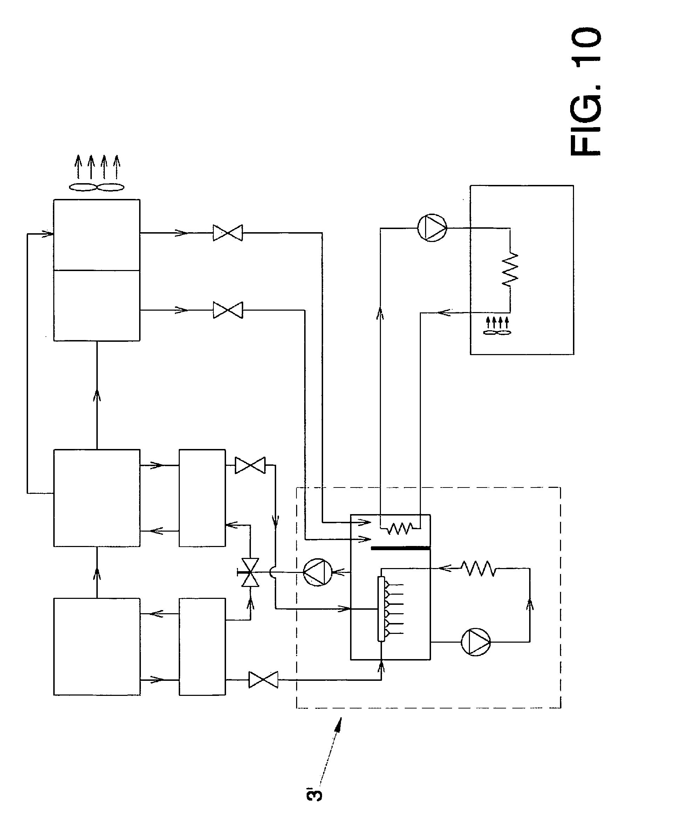

Figure 10 shows a double effect absorption machine that likewise integrates this absorber-evaporator assembly (3').

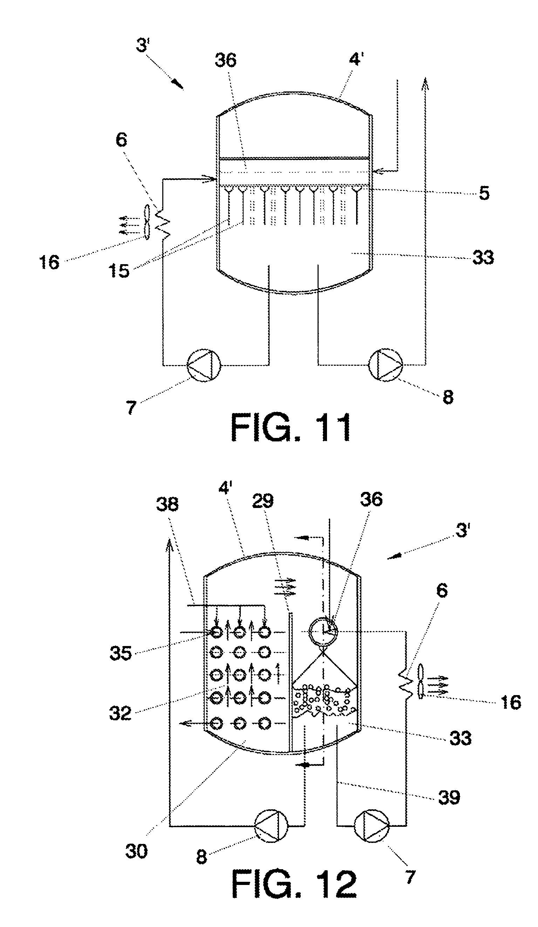

In figures 11 and 12 the absorber-evaporator assembly can be appreciated in greater detail, wherein the vertical wall (29), shown in figure 12 allows the vapour to pass from the evaporation chamber (30) to the absorption chamber (33) by the upper part of the storage tank (4'), since the separating wall (29) does not reach the top.

The evaporation chamber (30) receives at least one water supply line (38) from the condenser (11) until it reaches the evaporator (32), which comprises a circuit of refrigerant liquid formed by tubes (35), where secondary hot refrigerant liquid circulates (at approximately 10°C-18° C) through the upper tubes (35), and secondary cooler refrigerant liquid circulates (at approximately 7°C-15°C) through the lower tubes (35), secondary refrigerant liquid that may be sent to the room (18) to be cooled, to a cold store, a greenhouse, etc. When the water comes into contact with the tubes (35) of the refrigerant liquid circuit, the water which is at very low pressure (approximately 8-15 mbar) evaporates and rises inside the evaporation chamber (30) surpassing the vertical separating wall (29) and reaching the absorption chamber (33).

In this absorption chamber (33), the water vapour arriving from the evaporation chamber (30) will come into contact with the lithium bromide solution that is projected from the sprinklers (5).

It has been contemplated for the absorption chamber (33) to have a collector (36) adapted to receive the hot and concentrated refrigerant solution coming from the recuperator (9), collector (36) on which the abovementioned sprinklers (5) are mounted, and that is likewise adapted to receive a recirculation line (39).

Hence, from this solution collector (36) the bromide solution is sprinkled via sprinklers (5). Sprinkling in the form of flat sheets (15) of lithium bromide favours its dilution with the vapour.

Once projected the sheet of solution falls to the bottom of the absorption chamber (33), as can be seen from figure 12, from where once diluted, part of the solution will be sent to the generator (1) with the help of the feed pump (8) and another part will be directed, by means of the exchanger (6), to the solution collector (7) of the absorption chamber (13) or the container (10), once again initiating the absorption process.

The heat exchanger (6) is of the solution-air or solution-water type.

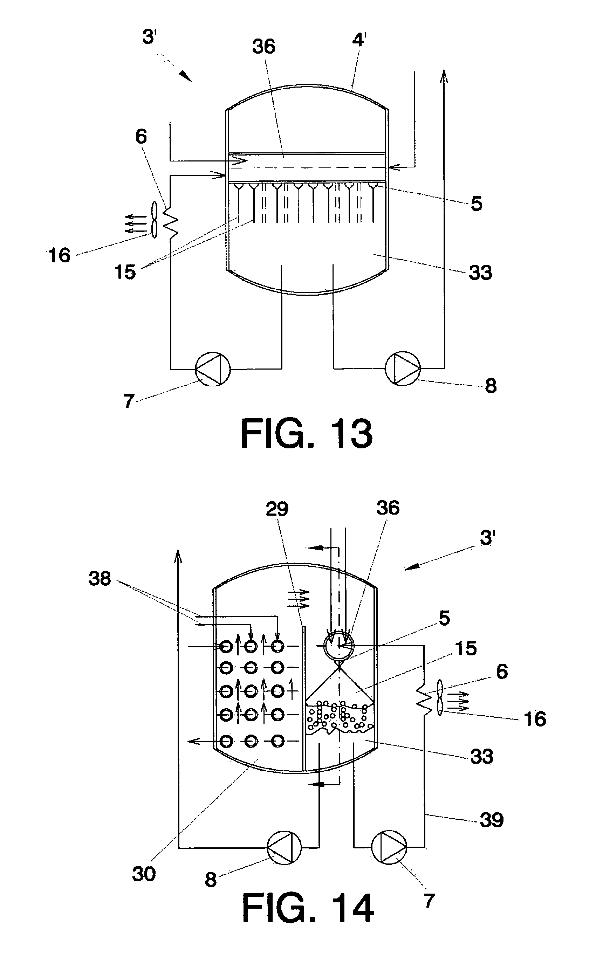

In the case of a double effect machine, it is likewise contemplated to include this absorber assembly (3'), as shown in figure 10, showing in detail in figures 13 and 14 that the absorber-evaporator assembly (3') maintains the same structure, with the inclusion of relevant input lines to the collector (36), in this case coming from the two recuperators (9', 9") and of relevant water input lines (38) coming from the condenser (11) and sub-cooler (24).

## Claims

1. Absorber (3) of a lithium bromide absorption machine, said absorber comprising:
a storage tank (4),
a row of sprinklers (5), situated inside the storage tank (4) adapted to receive a hot and concentrated solution, and to project it inside the tank (4) for its dilution,
a feed pump (8) adapted to extract the diluted solution from the absorber (3),
a heat exchanger (6), outside the storage tank (4) which cools the diluted solution, and
a recirculation pump (7) adapted to suck in the diluted solution from the storage tank (4) and propel it to the heat exchanger (6) for its return to the row of sprinklers (5) in a continuous recirculation process,
**characterised in that**
each one of the sprinklers of the row of sprinklers (5) comprises nozzles (14) with an oval shape, adapted to spray the solution in the form of a flat sheet (15) with an essentially triangular fan-type shape, said nozzles (14) being arranged in such a way that the flat sheets (15) are projected in parallel.

2. Absorber (3) of a lithium bromide absorption machine according to claim 1 **characterised in that** the heat exchanger (6) is of the solution-air type.

3. Absorber (3) of a lithium bromide absorption machine according to claim 1 **characterised in that** the heat exchanger (6) is of the solution-water type.

4. Absorber-evaporator assembly of a lithium bromide absorption machine, said absorber-evaporator assembly comprising:
a storage tank (4')
a row of sprinklers (5), situated inside the storage tank (4) adapted to receive a hot and concentrated solution, and to project it inside the storage tank (4') for its dilution,
a feed pump (8) adapted to extract the diluted solution,
**characterised in that** additionally it comprises:
a heat exchanger (6), outside the storage tank (4) which cools the diluted solution, and
a recirculation pump (7) adapted to suck in the diluted solution from the storage tank (4) and to propel it to the heat exchanger (6) for its return to the row of sprinklers (5) in a continuous recirculation process,
and **in that** the storage tank (4') is fitted with an isolating vertical separating wall (29) that defines two chambers (30, 33) communicating with each other at their upper part consisting of:
an evaporation chamber (30) defined on one side of the vertical separating wall (29) which comprises an evaporator (32), and
an absorption chamber (33) defined on the other side of the vertical separating wall (29),
**characterised in that**.
each one of the sprinklers of the row of sprinklers (5) comprises nozzles (14) with an oval shape, adapted to spray the solution in the form of a flat sheet (15) with an essentially triangular fan-type configuration, said nozzles (14) being arranged in such a way that said flat sheets (15) are projected in parallel.

5. Absorber-evaporator assembly (1) according to claim 4 **characterised in that** the heat exchanger (16) is of the solution-air type.

6. Absorber-evaporator assembly of a lithium bromide absorption machine according to claim 4 **characterised in that** the heat exchanger (16) is of the solution-water type.

7. Absorber-evaporator assembly of a lithium bromide absorption machine according to claim 5 **characterised in that** the absorption chamber (33) includes a collector (36) adapted to receive the hot and concentrated refrigerant solution, and also mounts the abovementioned sprinklers (5), and is adapted to receive a recirculation line (39).

8. Single effect lithium bromide absorption machine comprising:
- a heat generator (1) with a heating chamber (2) adapted to heat the lithium bromide-water solution,
- an absorber (3),
- a heat recuperator (9) situated between the generator (1) and the absorber (3) wherein the heat is transferred from the hot and concentration solution that comes out of the generator (1) to the cold and diluted solution that comes from the absorber (3), preheating it, before being supplied to the generator (1),
- a pressure reduction valve (10) situated between the heat recuperator (9) and the absorber (3),
- a condenser (11) connected to the generator (1) which condenses the water vapour produced in the generator (1),
- an evaporator (12) connected to the absorber (3) adapted to introduce water vapour into the absorber (3),
- an expansion valve (13) which connects the condenser (11) to the evaporator (12),
**characterised in that** the absorber (3) is the absorber (3) described in any of claims 1-3.

9. Double effect lithium bromide absorption machine comprising:
- a high pressure generator (1') and a low pressure generator (1") connected to the high pressure generator (1') to heat the lithium bromide-water solution,
- an absorber (3),
- a high pressure recuperator (9') and a low pressure recuperator (9") associated to the high pressure generator (1') and low pressure generator (1 "), adapted to send the hot and concentrated solution from the generators (1', 1 ") to the absorber (3),
- pressure reduction valves (10', 10") associated respectively to the high pressure generator (1') and low pressure generator (1 "),
- a solution distribution valve (25) situated between the feed pump (8) and the recuperators (9' 9"),
- a condenser (11) connected to the high pressure generator (1') which condenses the water vapour produced in the high pressure generator (1'),
- a sub-cooler (24) adjacent to the condenser (11) connected to the low pressure generator (1 "),
- an evaporator (12) connected to the absorber (3) adapted to introduce water vapour into the absorber (3),
- expansion valves for high (13') and low pressure (13") respectively, situated between the evaporator (12) and the condenser (11), and between the evaporator (12) and the sub-cooler (24),
**characterised in that** the absorber (3) is the absorber (3) described in any of claims 1-3.

10. Single effect lithium bromide absorption machine **characterised in that** it comprises:
- the absorber-evaporator assembly (3') described in any of claims 4-7,
- a heat generator (1) with a heating chamber (2) adapted to heat the lithium bromide-water solution,
- a heat recuperator (9) situated between the generator (1) and the absorber-evaporator (3') where the heat is transferred from the hot and concentrated solution that comes out of the generator (1) to the cold and diluted solution that comes from the absorber-evaporator (3'), preheating it, before feeding it to the generator (1),
- a pressure reduction valve (10) situated between the heat recuperator (9) and the absorber-evaporator (3'),
- a condenser (11) connected to the generator (1) which condenses the water vapour produced in the generator (1), and
- an expansion valve (13) which connects the condenser (11) to the evaporator (12).

11. Double effect lithium bromide absorption machine **characterised in that** it comprises:
- the absorber-evaporator assembly (3') described in any of claims 4-7,
- a high pressure generator (1') and a low pressure generator (1") connected to the high pressure generator (1') to heat the lithium bromide-water solution,
- a high pressure recuperator (9') and a low pressure recuperator (9") associated to the high pressure generator (1') and low pressure generator (1 "), adapted to send the hot and concentrated solution from the generators (9', 9") to the absorber-evaporator assembly (3'),
- pressure reduction valves (10', 10") associated respectively to the high pressure generator (1') and low pressure generator (1 "),
- a solution distribution valve (25) situated between the feed pump (8) and the recuperators (9' 9"),
- a condenser (11) connected to the generator (1) which condenses the water vapour produced in the generator (1),
- a sub-cooler (24) adjacent to the condenser (11) connected to the low pressure generator (1 "), and
- high pressure (13') and low pressure (13") expansion valves situated respectively between the evaporator (12) and the condenser (11), and between the evaporator (12) and the sub-cooler (24).

12. Single and double effect lithium bromide absorption unit **characterised in that** it comprises the single effect absorption machine described in claim 8 and the double effect absorption machine described in claim 9, and additionally comprises the valves described below which determine the single or double effect functioning mode or combined functioning mode:
- a connection valve (37) between the generator (1) and the condenser (11),
- a return valve to the recuperator (26), situated between the recuperator (9) and a branch that runs from the solution distribution valve (25) to the feed pump (8),
- a circulation valve to the sub-cooler (27), which connects the low pressure generator (1 ") to the sub-cooler (24), and
- a circulation valve to the condenser (28) which connects the low pressure generator (1 ") to the condenser (11).

13. Single and double effect lithium bromide absorption unit **characterised in that** it comprises the single effect absorption machine described in claim 10 and the double effect absorption machine described in claim 11 and **in that** it additionally comprises the valves described below which determine the single effect or double effect functioning mode or combined functioning mode:
- a connection valve (37) between the generator (1) and the condenser (11),
- a return valve to the recuperator (26), situated between the recuperator (9) and a branch that runs from the solution distribution valve (25) to the feed pump (8),
- a circulation valve to the sub-cooler (27), which connects the low pressure generator (1 ") to the sub-cooler (24), and
- a circulation valve to the condenser (28) which connects the low pressure generator (1 ") to the condenser (11).

14. Single and double effect lithium bromide absorption unit according to any of claims 12 or 13 **characterised in that** the single effect machine uses as the source of heat a renewable energy source, preferably solar, or energy recovered from residual heat and the double effect machine uses as the source of heat the source of energy of a fuel.

## Patentansprüche

1. Absorber (3) einer Lithiumbromid-Absorptionsmaschine, wobei der besagte Absorber Folgendes umfasst:
einen Speichertank (4),
eine Reihe von Sprühdüsen (5), die sich innerhalb des Speichertanks (4) befinden und dazu ausgelegt sind, eine heiße und konzentrierte Lösung zu empfangen und diese zu deren Verdünnung in das Innere des Tanks (4) zu spritzen,
eine Speisepumpe (8), die dazu ausgelegt ist, die verdünnte Lösung aus dem Absorber (3) zu extrahieren,
ein Wärmetauscher (6) außerhalb des Speichertanks (4), der die verdünnte Lösung abkühlt und
eine Umwälzpumpe (7), die dazu ausgelegt ist, die verdünnte Lösung aus dem Speichertank (4) anzusaugen und diese an den Wärmetauscher (6) zu fördern, um diese in einem kontinuierlichen Umwälzprozess an die Reihe von Sprühdüsen (5) zurückzuleiten,
**dadurch gekennzeichnet, dass**
jede der Sprühdüsen der Reihe von Sprühdüsen (5) ovalförmige Düsen (14) umfasst, die dazu ausgelegt sind, die Lösung in Form eines flachen Bogens (15) mit einer im Wesentlichen dreieckigen fächerartigen Form zu sprühen, wobei die besagten Düsen (14) derart angeordnet sind, dass die flachen Bögen (15) parallel ausgestoßen werden.

2. Absorber (3) einer Lithiumbromid-Absorptionsmaschine nach Anspruch 1, **dadurch gekennzeichnet, dass** der Wärmetauscher (6) in Form eines Lösung/Luft-Wärmetauschers ausgelegt ist.

3. Absorber (3) einer Lithiumbromid-Absorptionsmaschine nach Anspruch 1, **dadurch gekennzeichnet, dass** der Wärmetauscher (6) in Form eines Lösung/Wasser-Wärmetauschers ausgelegt ist.

4. Absorber-Verdampfer-Baugruppe einer Lithiumbromid-Absorptionsmaschine, wobei die besagte Absorber-Verdampfer-Baugruppe Folgendes umfasst:
einen Speichertank (4'),
eine Reihe von Sprühdüsen (5), die sich innerhalb des Speichertanks (4) befinden und dazu ausgelegt sind, eine heiße und konzentrierte Lösung zu empfangen und diese zu deren Verdünnung in das Innere des Speichertanks (4') zu spritzen,
eine Speisepumpe (8), die dazu ausgelegt ist, die verdünnte Lösung zu extrahieren, **dadurch gekennzeichnet, dass** diese zusätzlich Folgendes umfasst:
ein Wärmetauscher (6) außerhalb des Speichertanks (4), der die verdünnte Lösung abkühlt und
eine Umwälzpumpe (7), die dazu ausgelegt ist, die verdünnte Lösung aus dem Speichertank (4) anzusaugen und diese an den Wärmetauscher (6) zu fördern, um diese in einem kontinuierlichen Umwälzprozess an die Reihe von Sprühdüsen (5) zurückzuleiten,
und dass der Speichertank (4') mit einer isolierenden vertikalen Trennwand (29) ausgestattet ist, die zwei Kammern (30, 33) definiert, die in deren oberen Teil miteinander kommunizieren und aus Folgendem bestehen:
eine Verdampfungskammer (30), die auf einer Seite der vertikalen Trennwand (29) definiert ist und einen Verdampfer (32) umfasst, sowie
eine Absorptionskammer (33), die auf der anderen Seite der vertikalen Trennwand (29) definiert ist,
**dadurch gekennzeichnet, dass**
jede der Sprühdüsen der Reihe von Sprühdüsen (5) ovalförmige Düsen (14) umfasst, die dazu ausgelegt sind, die Lösung in Form eines flachen Bogens (15) mit einer im Wesentlichen dreieckigen fächerartigen Form zu sprühen, wobei die besagte Düsen (14) derart angeordnet sind, dass die flachen Bögen (15) parallel ausgestoßen werden.

5. Absorber-Verdampfer-Baugruppe (1) nach Anspruch 4, **dadurch gekennzeichnet, dass** der Wärmetauscher (16) in Form eines Lösung/Luft-Wärmetauschers ausgelegt ist.

6. Absorber-Verdampfer-Baugruppe einer Lithiumbromid-Absorptionsmaschine nach Anspruch 4, **dadurch gekennzeichnet, dass** der Wärmetauscher (16) in Form eines Lösung/Wasser-Wärmetauschers ausgelegt ist.

7. Absorber-Verdampfer-Baugruppe einer Lithiumbromid-Absorptionsmaschine nach Anspruch 5, **dadurch gekennzeichnet, dass** die Absorptionskammer (33) einen Kollektor (36) umfasst, der dazu ausgelegt ist, die heiße und konzentrierte Kühllösung zu empfangen, und in dem ebenfalls die oben erwähnten Sprühdüsen (5) montiert sind und der dazu ausgelegt ist, eine Umwälzleitung (39) zu empfangen.

8. Einfach wirkende Lithiumbromid-Absorptionsmaschine, die Folgendes umfasst:
- einen Wärmeerzeuger (1) mit einer Heizkammer (2), der dazu ausgelegt ist, die Lithiumbromid-Wasser-Lösung zu erhitzen,
- einen Absorber (3),
- einen Wärmewandler (9), der sich zwischen dem Erzeuger (1) und dem Absorber (3) befindet, in dem die Wärme von der aus dem Erzeuger (1) kommenden heißen und konzentrierten Lösung an die aus dem Absorber (3) kommende kalte und verdünnte Lösung übertragen wird, wobei diese vorerhitzt wird, bevor diese an den Erzeuger (1) geleitet wird,
- ein Druckminderungsventil (10), das sich zwischen dem Wärmewandler (9) und dem Absorber (3) befindet,
- ein Kondensator (11), der mit dem Erzeuger (1) verbunden ist und den in dem Erzeuger (1) erzeugten Wasserdampf kondensiert,
- einen Verdampfer (12), der mit dem Absorber (3) verbunden ist und dazu ausgelegt ist, Wasserdampf in den Absorber (3) einzuführen,
- ein Expansionsventil (13), das den Kondensator (11) mit dem Verdampfer (12) verbindet,
**dadurch gekennzeichnet, dass** der Absorber (3) der in irgendeinem der Ansprüche 1-3 beschriebene Absorber (3) ist.

9. Zweifach wirkende Lithiumbromid-Absorptionsmaschine, die Folgendes umfasst:
- einen Hochdruckgenerator (1`) und einen Niederdruckgenerator (1 "), der mit dem Hochdruckgenerator (1`) verbunden ist, um die Lithiumbromid-Wasser-Lösung zu erhitzen,
- eine Absorber (3),
- einen Hochdruckwandler (9') und einen Niederdruckwandler (9"), die mit dem Hochdruckgenerator (1`) und dem Niederdruckgenerator (1") verknüpft sind und dazu ausgelegt sind, die heiße und konzentrierte Lösung von den Generatoren (1', 1") an den Absorber (3) zu senden,
- Durchminderungsventile (10', 10"), die jeweils mit dem Hochdruckgenerator (1') und dem Niederdruckgenerator (1 ") verknüpft sind,
- ein Lösungsverteilerventil (25), das sich zwischen der Speisepumpe (8) und den Wandlern (9', 9") befindet,
- einen Kondensator (11), der mit dem Hochdruckgenerator (1') verbunden ist und den von dem Hochdruckgenerator (1') erzeugten Wasserdampf kondensiert,
- einen an den Kondensator (11) angrenzenden Nachkühler (24), der mit dem Niederdruckgenerator (1 ") verbunden ist,
- einen Verdampfer (12), der mit dem Absorber (3) verbunden ist und dazu ausgelegt ist, Wasserdampf in den Absorber (3) einzuführen,
- Expansionsventile für Hoch- (13') bzw. Niederdruck (13"), die sich jeweils zwischen dem Verdampfer (12) und dem Kondensator (11) und zwischen dem Verdampfer (12) und dem Nachkühler (24) befinden,
**dadurch gekennzeichnet, dass** der Absorber (3) der in irgendeinem der Ansprüche 1-3 beschriebene Absorber (3) ist.

10. Einfach wirkende Lithiumbromid-Absorptionsmaschine, **dadurch gekennzeichnet, dass** diese Folgendes umfasst:
- die in irgendeinem der Ansprüche 4-7 beschriebene Absorber-Verdampfer-Baugruppe (3'),
- einen Wärmeerzeuger (1) mit einer Heizkammer (2), der dazu ausgelegt ist, die Lithiumbromid-Wasser-Lösung zu erhitzen,
- einen Wärmewandler (9), der sich zwischen dem Erzeuger (1) und dem Absorber-Verdampfer (3') befindet, in dem die Wärme von der aus dem Erzeuger (1) kommenden heißen und konzentrierten Lösung an die aus dem Absorber-Verdampfer (3') kommende kalte und verdünnte Lösung übertragen wird, wobei diese vorerhitzt wird, bevor diese an den Erzeuger (1) geleitet wird,
- ein Druckminderungsventil (10), das sich zwischen dem Wärmewandler (9) und dem Absorber-Verdampfer (3') befindet,
- ein Kondensator (11), der mit dem Erzeuger (1) verbunden ist und den in dem Erzeuger (1) erzeugten Wasserdampf kondensiert,
- ein Expansionsventil (13), das den Kondensator (11) mit dem Verdampfer (12) verbindet.

11. Zweifach wirkende Lithiumbromid-Absorptionsmaschine, **dadurch gekennzeichnet, dass** diese Folgendes umfasst:
- die in irgendeinem der Ansprüche 4-7 beschriebene Absorber-Verdampfer-Baugruppe (3'),
- einen Hochdruckgenerator (1') und einen Niederdruckgenerator (1 "), der mit dem Hochdruckgenerator (1') verbunden ist, um die Lithiumbromid-Wasser-Lösung zu erhitzen,
- einen Hochdruckwandler (9') und einen Niederdruckwandler (9"), die mit dem Hochdruckgenerator (1') und dem Niederdruckgenerator (1") verknüpft sind und dazu ausgelegt sind, die heiße und konzentrierte Lösung von den Generatoren (9', 9") an die Absorber-Verdampfer-Baugruppe (3') zu senden,
- Durchminderungsventile (10', 10"), die jeweils mit dem Hochdruckgenerator (1') und dem Niederdruckgenerator (1 ") verknüpft sind,
- ein Lösungsverteilerventil (25), das sich zwischen der Speisepumpe (8) und den Wandlern (9', 9") befindet,
- einen Kondensator (11), der mit dem Generator (1) verbunden ist und den von dem Generator (1) erzeugten Wasserdampf kondensiert,
- einen an den Kondensator (11) angrenzenden Nachkühler (24), der mit dem Niederdruckgenerator (1 ") verbunden ist, und
- Expansionsventile für Hoch- (13') bzw. Niederdruck (13"), die sich jeweils zwischen dem Verdampfer (12) und dem Kondensator (11) und zwischen dem Verdampfer (12) und dem Nachkühler (24) befinden.

12. Einfach und zweifach wirkende Lithiumbromid-Absorptionseinheit, **dadurch gekennzeichnet, dass** diese die in Anspruch 8 beschriebene einfach wirkende Absorptionsmaschine und die in Anspruch 9 beschriebene zweifach wirkende Absorptionsmaschine umfasst und zusätzlich dazu die unten beschriebenen Ventile einschließt, welche den einfach wirkenden oder zweifach wirkenden oder den kombinierten Betriebsmodus bestimmen:
- ein Verbindungsventil (37) zwischen dem Generator (1) und dem Kondensator (11),
- ein Rückschlagventil an den Wandler (26), das sich zwischen dem Wandler (9) und einem Zweig befindet, der von dem Lösungsverteilerventil (25) bis zur Speisepumpe (8) verläuft,
- ein Umwälzventil an den Nachkühler (27), das den Niederdruckgenerator (1 ") mit dem Nachkühler (24) verbindet, und
- ein Umwälzventil an den Kondensator (28), das den Niederdruckgenerator (1 ") mit dem Kondensator (11) verbindet.

13. Einfach und zweifach wirkende Lithiumbromid-Absorptionseinheit, **dadurch gekennzeichnet, dass** diese die in Anspruch 10 beschriebene einfach wirkende Absorptionsmaschine und die in Anspruch 11 beschriebene zweifach wirkende Absorptionsmaschine umfasst und zusätzlich dazu die unten beschriebenen Ventile einschließt, welche den einfach wirkenden oder zweifach wirkenden oder den kombinierten Betriebsmodus bestimmen:
- ein Verbindungsventil (37) zwischen dem Generator (1) und dem Kondensator (11),
- ein Rückschlagventil an den Wandler (26), das sich zwischen dem Wandler (9) und einem Zweig befindet, der von dem Lösungsverteilerventil (25) bis zur Speisepumpe (8) verläuft,
- ein Umwälzventil an den Nachkühler (27), das den Niederdruckgenerator (1 ") mit dem Nachkühler (24) verbindet, und
- ein Umwälzventil an den Kondensator (28), das den Niederdruckgenerator (1 ") mit dem Kondensator (11) verbindet.

14. Einfach und zweifach wirkende Lithiumbromid-Absorptionseinheit nach irgendeinem der Ansprüche 12 oder 13, **dadurch gekennzeichnet, dass** die einfach wirkende Maschine als Wärmequelle eine erneuerbare Energiequelle, vorzugsweise Sonnenenergie, oder aus der Restwärme zurückgewonnene Energie verwendet und dass die zweifach wirkende Maschine als Wärmequelle eine Brennstoff-Energiequelle verwendet.

## Revendications

1. Absorbeur (3) d'une machine à absorption au bromure de lithium, ledit absorbeur comprenant :
une cuve de stockage (4),
une rangée de gicleurs (5), située à l'intérieur de la cuve de stockage (4) adaptée pour recevoir une solution chaude et concentrée, et pour la projeter à l'intérieur de la cuve de stockage (4) en vue de sa dilution,
une pompe d'alimentation (8) adaptée pour extraire la solution diluée de l'absorbeur (3),
un échangeur de chaleur (6), à l'extérieur de la cuve de stockage (4) qui refroidit la solution diluée, et
une pompe de recirculation (7) adaptée pour aspirer la solution diluée de la cuve de stockage (4) et la propulser vers l'échangeur de chaleur (6) en vue de son retour vers la rangée de gicleurs (5) en un processus de recirculation continu,
**caractérisé en ce que**
chacun des gicleurs de la rangée de gicleurs (5) comprend des buses (14) de forme ovale, adaptées pour pulvériser la solution sous la forme d'une feuille plate (15) à la configuration en éventail essentiellement triangulaire, lesdites buses (14) étant disposées de façon à ce que les feuilles plates (15) soient projetées parallèlement.

2. Absorbeur (3) d'une machine à absorption au bromure de lithium, selon la revendication 1, **caractérisé en ce que** l'échangeur de chaleur (6) est de type solution-air.

3. Absorbeur (3) d'une machine à absorption au bromure de lithium, selon la revendication 1, **caractérisé en ce que** l'échangeur de chaleur (6) est de type solution-eau.

4. Ensemble absorbeur-évaporateur d'une machine à absorption au bromure de lithium, ledit ensemble absorbeur-évaporateur comprenant :
une cuve de stockage (4')
une rangée de gicleurs (5), située à l'intérieur de la cuve de stockage (4) adaptée pour recevoir une solution chaude et concentrée, et pour la projeter à l'intérieur de la cuve de stockage (4') en vue de sa dilution,
une pompe d'alimentation (8) adaptée pour extraire la solution diluée,
**caractérisé en ce qu'**il comporte en outre :
un échangeur de chaleur (6), à l'extérieur de la cuve de stockage (4) qui refroidit la solution diluée, et
une pompe de recirculation (7) adaptée pour aspirer la solution diluée de la cuve de stockage (4) et la propulser vers l'échangeur de chaleur (6) en vue de son retour vers la rangée de gicleurs (5) en un processus de recirculation continu,
et **en ce que** la cuve de stockage (4') est équipée d'une paroi de séparation verticale isolante (29) qui définit deux chambres (30, 33) communiquant dans leur partie supérieure consistant en :
une chambre d'évaporation (30) définie d'un côté de la paroi de séparation verticale (29) qui comprend un évaporateur (32), et
une chambre d'absorption (33) définie de l'autre côté de la paroi
de séparation verticale (29),
**caractérisé en ce que**
chacun des gicleurs de la rangée de gicleurs (5) comprend des buses (14) de forme ovale, adaptées pour pulvériser la solution sous la forme d'une feuille plate (15) à la configuration en éventail essentiellement triangulaire, lesdites buses (14) étant disposées de façon à ce que lesdites feuilles plates (15) soient projetées parallèlement.

5. Ensemble absorbeur-évaporateur (1) selon la revendication 4, **caractérisé en ce que** l'échangeur de chaleur (16) est de type solution-air.

6. Ensemble absorbeur-évaporateur d'une machine à absorption au bromure de lithium selon la revendication 4, **caractérisé en ce que** l'échangeur de chaleur (16) est de type solution-eau.

7. Ensemble absorbeur-évaporateur d'une machine à absorption au bromure de lithium selon la revendication 5, **caractérisé en ce que** la chambre à absorption (33) comprend un collecteur (36) adapté pour recevoir la solution réfrigérante chaude et concentrée, et où sont également montés les gicleurs (5) susmentionnés, et qui est adapté pour recevoir une ligne de recirculation (39).

8. Une machine à absorption au bromure de lithium à simple effet comprenant :
- un générateur de chaleur (1) avec une chambre de chauffage (2) adaptée pour chauffer la solution bromure de lithium-eau,
- un absorbeur (3),
- un récupérateur de chaleur (9) situé entre le générateur (1) et l'absorbeur (3) dans lequel la chaleur est transférée de la solution chaude et concentrée qui sort du générateur (1) à la solution froide et diluée qui provient de l'absorbeur (3), la préchauffant, avant qu'elle ne soit fournie au générateur (1),
- une vanne de réduction de pression (10) située entre le récupérateur de chaleur (9) et l'absorbeur (3),
- un condenseur (11) relié au générateur (1) qui condense la vapeur d'eau produite dans le générateur (1),
- un évaporateur (12) relié à l'absorbeur (3) adapté pour introduire de la vapeur d'eau dans l'absorbeur (3),
- une vanne d'expansion (13) qui relie le condenseur (11) à l'évaporateur (12),
**caractérisée en ce que** l'absorbeur (3) est l'absorbeur (3) décrit dans n'importe laquelle des revendications 1-3.

9. Une machine à absorption au bromure de lithium à double effet comprenant :
- un générateur à haute pression (1') et un générateur à basse pression (1") relié au générateur à haute pression (1') pour chauffer la solution bromure de lithium-eau,
- un absorbeur (3),
- un récupérateur à haute pression (9') et un récupérateur à basse pression (9") associés au générateur à haute pression (1') et au générateur à basse pression (1"), adaptés pour envoyer la solution chaude et concentrée depuis les générateurs (1', 1") à l'absorbeur (3),
- des vannes de réduction de pression (10', 10") associées respectivement au générateur à haute pression (1') et au générateur à basse pression (1"),
- une vanne de distribution de solution (25) située entre la pompe d'alimentation (8) et les récupérateurs (9', 9"),
- un condenseur (11) relié au générateur à haute pression (1') qui condense la vapeur d'eau produite dans le générateur à haute pression (1'),
- un sous-refroidisseur (24) adjacent au condenseur (11) relié au générateur à basse pression (1"),
- un évaporateur (12) relié à l'absorbeur (3) adapté pour introduire de la vapeur d'eau dans l'absorbeur (3),
- des vannes d'expansion pour haute (13') et basse pression (13") respectivement, situées entre l'évaporateur (12) et le condenseur (11), et entre l'évaporateur (12) et le sous refroidisseur (24),
**caractérisée en ce que** l'absorbeur (3) est l'absorbeur (3) décrit dans n'importe laquelle des revendications 1-3.

10. Une machine à absorption au bromure de lithium à simple effet **caractérisée en ce qu'**elle comprend :
- l'ensemble absorbeur-évaporateur (3') décrit dans n'importe laquelle des revendications 4-7,
- un générateur de chaleur (1) avec une chambre de chauffage (2) adaptée pour chauffer la solution bromure de lithium-eau,
- un récupérateur de chaleur (9) situé entre le générateur (1) et l'absorbeur-évaporateur (3') où la chaleur est transférée de la solution chaude et concentrée qui sort du générateur (1) à la solution froide et diluée qui provient de l'absorbeur-évaporateur (3'), la préchauffant, avant d'en alimenter le générateur (1),
- une vanne de réduction de pression (10) située entre le récupérateur de chaleur (9) et l'absorbeur-évaporateur (3'),
- un condenseur (11) relié au générateur (1) qui condense la vapeur d'eau produite dans le générateur (1), et
- une vanne d'expansion (13) qui relie le condenseur (11) à l'évaporateur (12).

11. Une machine à absorption au bromure de lithium à double effet **caractérisée en ce qu'**elle comprend :
- l'ensemble absorbeur-évaporateur (3') décrit dans n'importe laquelle des revendications 4-7,
- un générateur à haute pression (1') et un générateur à basse pression (1 ") relié au générateur à haute pression (1') pour chauffer la solution bromure de lithium-eau,
- un récupérateur à haute pression (9') et un récupérateur à basse pression (9") associés au générateur à haute pression (1') et au générateur à basse pression (1 "), adaptés pour envoyer la solution chaude et concentrée depuis les générateurs (9', 9") à l'ensemble absorbeur-évaporateur (3'),
- des vannes de réduction de pression (10', 10") associées respectivement au générateur à haute pression (1') et au générateur à basse pression (1"),
- une vanne de distribution de solution (25) située entre la pompe d'alimentation (8) et les récupérateurs (9', 9"),
- un condenseur (11) relié au générateur (1) qui condense la vapeur d'eau produite dans le générateur (1),
- un sous-refroidisseur (24) adjacent au condenseur (11) relié au générateur à basse pression (1"), et
- des vannes d'expansion haute pression (13') et basse pression (13") situées respectivement entre l'évaporateur (12) et le condenseur (11), et entre l'évaporateur (12) et le sous refroidisseur (24).

12. Unité à absorption au bromure de lithium à simple et double effet, **caractérisée en ce qu'**elle comprend la machine à absorption à simple effet décrite dans la revendication 8 et la machine à absorption à double effet décrite dans la revendication 9, et **en ce qu'**elle comprend en outre les vannes décrites ci-dessous qui déterminent le mode de fonctionnement à simple effet ou à double effet ou le mode de fonctionnement combiné :
- une vanne de raccordement (37) entre le générateur (1), et le condenseur (11),
- une vanne de retour au récupérateur (26), située entre le récupérateur (9) et une branche qui va de la vanne de distribution de solution (25) à la pompe d'alimentation (8),
- une vanne de circulation au sous-refroidisseur (27), qui relie le générateur basse pression (1") au sous-refroidisseur (24), et
- une vanne de circulation au condenseur (28) qui relie le générateur basse pression (1") au condenseur (11).

13. Unité à absorption au bromure de lithium à simple et double effet, **caractérisée en ce qu'**elle comprend la machine à absorption à simple effet décrite dans la revendication 10 et la machine à absorption à double effet décrite dans la revendication 11, et **en ce qu'**elle comprend en outre les vannes décrites ci-dessous qui déterminent le mode de fonctionnement à simple effet ou à double effet ou le mode de fonctionnement combiné :
- une vanne de raccordement (37) entre le générateur (1), et le condenseur (11),
- une vanne de retour au récupérateur (26), située entre le récupérateur (9) et une branche qui va de la vanne de distribution de solution (25) à la pompe d'alimentation (8),
- une vanne de circulation au sous-refroidisseur (27), qui relie le générateur basse pression (1") au sous-refroidisseur (24), et
- une vanne de circulation au condenseur (28) qui relie le générateur basse pression (1") au condenseur (11).

14. Unité à absorption au bromure de lithium à simple et double effet selon n'importe laquelle des revendications 12 ou 13, **caractérisée en ce que** la machine à simple effet utilise comme source de chaleur une source d'énergie renouvelable, solaire de préférence, ou l'énergie récupérée de la chaleur résiduelle et **en ce que** la machine à double effet utilise comme source de chaleur la source d'énergie d'un combustible.
